# EUROPÄISCHE PATENTSCHRIFT

(11) **EP 2 915 581 B1**
(45) Veröffentlichungstag und Bekanntmachung des Hinweises auf die Patenterteilung: **12.07.2017**
(21) Anmeldenummer: 14158196.7
(22) Anmeldetag: 06.03.2014
(51) Int. Cl.: B01J 19/24, B01F 5/06, B01F 5/04

(54) **Statischer Mischer**
Static mixer
Mélangeur statique

(43) Veröffentlichungstag der Anmeldung: 09.09.2015
(73) Patentinhaber: Fluitec Invest AG, 8442 Hettlingen (CH)
(72) Erfinder: Tribelhorn, Michael, 8442 Hettlingen (CH); Georg, Alain, 8442 Hettlingen (CH); Altenburger, Daniel, 8413 Neftenbach (CH); Brodhagen, Andreas, 67311 Tiefenthal (DE); Kermer, Cornelia, 67165 Waldsee (DE); El-Toufalli, Faissal-Ali, 67063 Ludwigshafen (DE)
(74) Vertreter: Liebetanz, Michael

(56) Entgegenhaltungen:
- WO-A1-2013/111789
- DE-B- 1 198 327
- DE-C- 183 671
- JP-A- S5 644 031
- JP-A- S5 644 032

## Beschreibung

### TECHNISCHES GEBIET

Die vorliegende Erfindung betrifft einen statischen Mischer zur Mischung oder Homogenisierung von zwei oder mehr Fluiden und einen Mischreaktor, welcher einen solchen statischen Mischer aufweist.

Der chemische Reaktor ist der Teil einer Anlage, in dem chemische Prozesse ablaufen und in dem chemische Umsetzungen durchgeführt werden.

Die Erfindung bezieht sich auf einen kontinuierlichen mehrstufigen Rohrreaktor mit Einbauten. Es soll konkret ein flexibler Rohreaktor entwickelt werden, der
- die Mischgeschwindigkeit der Reaktionsgeschwindigkeit,
- das Strömungsmuster dem Reaktionsmechanismus,
- die Verweilzeit der Reaktionszeit
- und den Wärmeübergang der Wärmeentwicklung anzupassen vermag.

Dies soll in einem Rohreaktor mit mehrstufigen Einbauten erfolgen. Dazu werden bekannte statische Mischer mit zusätzlichen neuartigen Einbauten kombiniert.

### STAND DER TECHNIK

Aus der Literatur sind verschiedene Bauformen von statischen Mischern bekannt. Sie beruhen darauf, dass an einer Vielzahl von Stegen oder Wandabschnitten eine fortgesetzte Umlenkung und/oder Teilung der Strömung erfolgt, so dass schließlich eine homogene Mischung erreicht wird.

Typische Ausführungen von statischen Mischern sind z. B. in der EP 2 286 904, WO 2013/111789 oder der EP 2 277 620 beschrieben. Alle diese Varianten sind aus regelmässigen metallischen Strukturen aufgebaut, entweder durch spanend hergestellte Hohlräume oder durch Zusammenbau einer Vielzahl z. B. gestanzter Blechkörper. Solche statischen Mischer sind aufwändig in der Herstellung, was zu langen Produktionszeiten und hohen Produktionskosten führt.

Alternativ zeigt die DE 103 27 986 einen statischen Mischer, welcher eine dreidimensionale Gitterstruktur aufweist, deren Gitterstege offenporige Zellen mit unterschiedlichen Zellenabmessungen bilden. Offenporige Sinterzylinder fallen beispielsweise unter diese Alternative. Auch diese statischen Mischer sind aufwändig in der Herstellung. Zudem sind die Gitterstrukturen nur begrenzt beeinflussbar, was die Reproduzierbarkeit erschwert. DE 183671 offenbart einen statischen Mischer entsprechend dem Oberbegriff des Anspruchs 1.

Das Umstellen eines Batch-Prozesses auf die kontinuierliche Betriebsweise bietet verschiedene entscheidende Vorteile wie erhöhte Sicherheit, konstante Produktqualität und maximale Wirtschaftlichkeit. Die kontinuierliche Produktionsweise erfordert jedoch bereits in der Planungsphase die Berücksichtigung verschiedenster Einflussgrössen wie Kinetik, Thermodynamik, Selektivität und Energieflüsse. Wenn diesen Schlüsselgrössen ausreichend Rechnung getragen wird, lässt sich eine kontinuierliche Reaktion sicher, konstant und mit grösstmöglichen Raum/Zeit-Ausbeuten führen.

Einmal in Betrieb genommen, bieten kontinuierliche Verfahren mehrere entscheidende Vorteile wie:
- verbesserte Reaktionskontrolle
- kleines Reaktionsvolumen
- keine Totzonen
- stabile Betriebsweise
- keine Reinigungs- und Beschickungszeiten
- geringer Platzbedarf, etc.

Mit entsprechend gestalteten Experimenten im Reaktionskalorimeter, Rührwerksreaktor oder gar im einfachen Becherglas lassen sich eine Fülle von technischen Informationen gewinnen wie: Reaktionsgeschwindigkeit (Kinetik), Wärmetönung und das chemische Gleichgewicht (Thermodynamik), Selektivität, Umsatz, Nebenprodukte, Viskositätsverlauf, erforderliche Energiedissipation zur Mischung, Temperaturabhängigkeit der Reaktionsgeschwindigkeit nach Arrhenius, etc.

Die Daten aus dem Batch-Reaktor können auf kontinuierlich arbeitende Rohrreaktoren übertragen werden. Unter Berücksichtigung der Mischeffizienz sowie der Wärmeströme wird die Reaktionszeit im Batch-Reaktor zur Verweilzeit im kontinuierlichen Rohrreaktor. Im kontinuierlich geführten Rohrreaktor lässt sich der Zeitpunkt der grössten Wärmeentwicklung örtlich präzise voraussagen. Volumen, Verweilzeit, spezifische Oberfläche und Wärmeabfuhr lassen sich zurzeit aber nur mittels Kaskaden oder Kreislaufreaktoren weitgehend uneingeschränkt realisieren.

In den letzten Jahren wurden vermehrt Mikroreaktoren eingesetzt, welche eine isotherme Reaktionsführung zulassen. Allerdings sind die Verweilzeiten in den Mikroreaktoren sehr klein, so dass zusätzliche Verweilzeit erforderlich wird, welche üblicherweise aus Rohrreaktoren bestehen und dem Mikroreaktor nachgeschaltet werden.

Im Stand der Technik ist es zur Durchführung schneller Reaktionen auch üblich eine Anzahl von Mischorganen bzw. Mischern einzusetzen. Dabei wird zwischen Dynamischen Mischern wie beispielsweise Rührer, Turbinen oder Rotor-Statorsystemen und statischen Mischern wie z.B. Kenics-Mischern, Fluitec-Mischern und Strahlmischern unterschieden.

Aus der EP 0749 987 ist ein Verfahren zur kontinuierlichen anionischen Polymerisation bekannt. Hierbei besteht das Monomersystem mindestens aus einem (Meth)acrylsäuremonomer. Der Initiator besteht aus Metallorganylen, wie sie zur anionischen Polymerisation verwendet werden. Da es sich bei derartigen Reaktionen um sehr schnelle Reaktionen handelt, die innerhalb von 0,2 bis 0,3 Sekunden zu vollständigem Umsatz führen, wurde für eine kontinuierliche Reaktionsführung ein adiabatischer Rohrreaktor mit vorgeschaltetem Mikromischer entwickelt. Bei dem Mikromischer handelt es sich um einen turbulent mischenden Tangentialstrommischer.

Die Verweilzeit im Mischer beträgt ca. 0,05 Sekunden. Die Edukte (Monomere, Lösungsmittel und Initiator) werden vor Zuführung in den Mischer auf -14 bis -40°C herabgekühlt, um einen Reaktionsstart im Mischer zu vermeiden. Die Reaktion findet danach im Rohrreaktor statt. Durch die adiabatische Reaktionsführung wird je nach Monomer-Initiator-System eine Endtemperatur von 44°C bis 91°C erreicht.

Ein weiteres Verfahren wird in EP 1 086 143beschriebenen. Die Aufgabe wird in der Weise gelöst, dass die Edukte vor dem Eintreten in den Mikromischer soweit vorgewärmt werden, dass sie eine erforderliche Reaktionstemperatur nach dem Eintritt in den Mikromischer erreichen, in welchem sie durch Diffusion und/oder Turbulenz in einer Weise vermischt werden, dass eine Bildung von bimodalen Molmassenverteilungen oder hochmolekularen Anteilen unterbleibt und dass eine Polymerisation der Monomeren-Reaktionspartnerin in einem dem Mikromischer nachgeschalteten Rohrreaktor stattfindet. Dazu ist es erforderlich, dass die Mischung sofort erfolgt, d.h. dass die Mischzeit kleiner als die Reaktionszeit zur Bildung einer einzelnen Polymerkette ist.

In beiden Patentschriften werden handelsübliche Mikroreaktoren mit Rohrreaktoren kombiniert. Bei einer Reaktorschaltung, bestehend aus einem Mikroreaktor und einem Rohrreaktor, muss mit einem Übergangsstück, bestehend aus mindestens einem Rohrstück und mindestens einem Konus, gearbeitet werden. Dabei stellt sich in diesem Übergangsstück, in einer äusserst kritischen Phase während der Reaktion, infolge laminarer Strömungsbedingungen ein sehr schlechtes Verweilzeitspektrum ein, welches sich negativ auf den Reaktionsverlauf auswirkt.

### DARSTELLUNG DER ERFINDUNG

Der Erfindung liegt die Aufgabe zugrunde, einen statischen Mischer zur Verfügung zu stellen, der eine einfache Herstellung ermöglicht und eine sichere Reproduzierbarkeit der Mischergebnisse gewährleistet.

Erfindungsgemäss wird diese Aufgabe durch einen statischen Mischer gemäss dem Anspruch 1 und einem Mischreaktor gemäss dem Anspruch 11 gelöst. Erfindungsgemäss weist ein statischer Mischer die Merkmale des Anspruchs 1 auf. Dies ermöglicht eine einfache Herstellung, indem beispielsweise ein stabförmiger Vollkörper mit einem kreisrunden Querschnitt in einer Bearbeitungsmaschine mit einer minimalen Anzahl von Umspannungen herstellbar ist. Beispielsweise wird der Vollkörper in einer ersten Einspannung plan gedreht, anschliessend wird der mindestens eine Kanal in die Manteloberfläche gefräst. Vorzugsweise kann die Bearbeitung der beiden freien Enden in der gleichen Aufspannung erfolgen. Dies führt jedoch zum Verlust des Materials des Vollkörpers im Bereich der Einspannung(en). Alternativ kann der Vollkörper umgespannt werden, um den Materialverlust zu vermeiden oder zu reduzieren. Im Vergleich zu den statischen Mischern aus dem Stand der Technik ist der Aufwand für die Herstellung jedoch wesentlich geringer.

Alternativ können auch Mischkörper mit nicht kreisrunden Querschnitten eingesetzt werden. So sind beispielsweise ovale, elliptische, drei-, vier- oder vieleckige Querschnitte denkbar. Bei beschränkten Platzverhältnissen können solche Querschnitte vorteilhaft sein. Beispielsweise erlaubt ein Querschnitt in der Form eines regelmässigen Sechsecks eine dichtest mögliche Packung von parallel zueinander angeordneten statischen Mischern oder Mischreaktoren.

Vorzugsweise verläuft die Hauptrichtung des mindestens einen durchgängigen Kanals im Wesentlichen nicht parallel zur Längsachse. D.h. ein gerader, zur Längsachse paralleler Kanal ist nicht bevorzugt, da praktisch keine Mischung in einem solchen statischen Mischer stattfindet. Bevorzugt windet sich der mindestens eine durchgängige Kanal um den Mischkörper. Alternativ ist es auch denkbar, dass sich der mindestens eine durchgängige Kanal vom ersten freien Ende zum zweiten schlängelt, d.h. alternierend eine Rechtsbiegung und eine Linksbiegung aufweist. Eine Vielzahl von unterschiedlichen Kanalgeometrien und -verläufen sind möglich, dadurch dass diese einfach aus der/den seitlichen Oberfläche(n) ausfräsbar sind.

Bevorzugt windet sich der mindestens eine durchgängige Kanal bezüglich der Längsrichtung in Rechts- oder in Linksrichtung um den Mischkörper. Vorzugsweise sind mehrere durchgängige Kanäle vorhanden, welche gleichmässig oder ungleichmässig verteilt am Mischkörper angeordnet sind.

In einer bevorzugten Ausführungsform sind Kanalaufweitungen entlang des mindestens einen durchgängigen Kanals angeordnet. Die Aufweitungen führen einerseits dazu, dass durch den vergrösserten Strömungsquerschnitt die Strömungsgeschwindigkeit verlangsamt wird und gleichzeitig führt die Strömungsumlenkung im Übergangsbereich vom Kanal in die Aufweitung zu Verwirbelungen, was den Mischeffekt vergrössert. Die Aufweitungen können so ausgestaltet sein, dass sie eine grössere seitliche Abmessung und/oder einer grössere Tiefe aufweisen. Aufweitungen, welche breiter aber weniger tief als der Kanal sind, sind auch denkbar. Wichtig ist, dass eine Veränderung des Strömungsquerschnitts, d.h. des hydraulischen Durchmessers stattfindet. Die Veränderung kann in der Form einer Aufweitung oder eine Verjüngung sein.

Bei einer Ausführungsform weist der statische Mischer mindestens zwei durchgängige Kanäle auf, welche Kanalkreuzungen aufweisen. Durch die Anordnung von mehreren Kanälen kann grundsätzlich der Durchsatz erhöht und der Strömungswiderstand reduziert werden. Die Kanalkreuzungen bewirken eine Verwirbelung der Strömung, was zu einer Erhöhung der Durchmischung führt.

Optional sind an einigen der Kanalkreuzungen Kanalaufweitungen angeordnet. Durch die Kombination der Kanäle mit den Kreuzungen und den Aufweitungen kann das Mischresultat beeinflusst werden. Ebenfalls kann der Strömungswiderstand beeinflusst werden. Es ist auch denkbar, an allen Kanalkreuzungen Kanalaufweitungen vorzusehen. Erfindungsgemäss ist ein Einlaufkanal zentrisch am ersten freien Ende des Mischkörpers angeordnet, welcher sich parallel zur Längsachse zumindest über einen Teil der Länge des Mischkörpers erstreckt und welcher über mindestens einen Verbindungskanal mit dem mindestens einen durchgängigen Kanal verbunden ist. Vorzugsweise erstreckt sich der mindestens eine durchgängige Kanal vom Anfang der Mantelfläche des Mischkörpers, d.h. von einem äussersten Punkt auf der Mantelfläche im Bereich des ersten freien Endes, bis zum Ende der Mantelfläche des Mischkörpers, d.h. bis zu einem äussersten Punkt auf der Mantelfläche im Bereich des zweiten freien Endes und der mindestens eine Verbindungskanal mündet beabstandet zum Anfang der Mantelfläche in den mindestens einen durchgängigen Kanal. Somit strömt ein Teil des zu mischenden ersten Fluides nicht durch den Einlaufkanal, sondern strömt direkt durch den zumindest einen durchgängigen Kanal.

Vorzugsweise ist der Einlaufkanal auf der gegen das erste freie Ende gerichteten Seite trichterförmiger Einlauf ausgebildet. Dies ermöglicht eine stetige Bündelung der Strömung in dem Einlaufkanal.

Bevorzugt erstreckt sich der Verbindungskanal im Wesentlichen radial vom Einlaufkanal nach aussen. Der Verbindungskanal kann senkrecht oder unter einem Winkel bezüglich der Längsachse angeordnet sein. Am einfachsten hinsichtlich der Herstellung ist die senkrechte Anordnung. Die winklige Anordnung bietet jedoch strömungstechnische Vorteile, denn eine scharfe Umlenkung führt zu Strömungswiderständen.

In einer bevorzugten Ausführungsform ist im Einlaufkanal ein weiterer statischer Mischer, bevorzugt ein poröser statischer Mischer, insbesondere ein poröser Sinterzylinder angeordnet. Es hat sich gezeigt, dass poröse Sinterzylinder dank des geringen Lückenvolumens sehr schnell und effizient mischen können. Die ermöglicht ein sehr schnelles Vormischen, was bei schnellen Reaktionen von Vorteil sein kann. Beispielsweise kann vor dem Eintritt in den weiteren statischen Mischer ein Additiv einem ersten Fluid beigegeben werden. In einer ersten Mischphase, wo die Viskosität noch niedrig ist, kann beispielsweise ein poröser Mischer eingesetzt werden. Durch die Mischung kann beispielsweise die Viskosität zunehmen und dies kann einen langen porösen Mischer verstopfen. Daher werden die zu mischenden Fluide nur über eine gewisse Länge im porösen Mischer geführt und anschliessend mittels des Verbindungskanals in den mindestens einen durchgängigen Kanal geführt, welcher einen grösseren Strömungsquerschnitt aufweist, womit die Gefahr der Verstopfung nicht mehr besteht. Vorzugsweise ist/sind das erste freie Ende und/oder das zweite freie Ende als eine zur Längsachse senkrecht oder winklig angeordnete Fläche, als mehrere aneinander angrenzende Flächen, oder konusförmig ausgebildet. Die unterschiedliche Ausgestaltung erlaubt die optimale Anpassung an einen dem Mischkörper nachgeschalteten statischen Mischer, beispielsweise mit Lamellen.

Bevorzugt weist der mindestens eine durchgängige Kanal einen polyederförmigen oder gerundeten Querschnitt, vorzugsweise einen dreieckigen, rechteckigen, trapez-, kreis- oder ellipsenförmigen Querschnitt auf. Durch die Wahl des Kanalquerschnitts lässt sich beispielsweise das Mischverhalten, der Strömungswiderstand oder die Wärmeübertragung beeinflussen. Beispielsweise ist ein optimales Verhältnis von Kanaloberfläche zu Kanalvolumen realisierbar.

Vorzugsweise erstreckt sich der mindestens eine durchgängige Kanal spiralförmig zwischen den beiden freien Enden. Diese Kanalform ist vorteilhaft hinsichtlich der Herstellung und dem Mischresultat.

Ein erfindungsgemässer Mischreaktor mit einem Mischrohr, welches einen inneren Durchmesser aufweist, weist mindestens einen darin angeordneten statischen Mischer gemäss einem der Ansprüche 1 bis 10 auf.

Vorzugsweise bilden der innere Durchmesser des Mischrohres und der äussere Durchmesser des erfindungsgemässen statischen Mischers eine nahezu spielfreie Passung, vorzugsweise mit einem Spiel von unter 0,5 Millimeter. Ein möglichst kleines Passspiel verhindert, dass Fluid neben dem dafür vorgesehenen mindestens einen durchgängigen Kanal strömt. Ausserdem bewirkt ein guter Kontakt zwischen dem Mischrohr und der Mantelfläche des Mischkörpers einen guten Wärmetransport zwischen den beiden Elementen. So kann der Mischprozess von ausserhalb des Mischrohres durch Kühlen oder Wärmen beeinflusst werden.

Bevorzugt ist dem erfindungsgemässen statischen Mischer ein statischer Mischer mit Lamellen oder ein poröser statischer Mischer in der Fliessrichtung nachfolgend angeordnet. Durch die einfache Bearbeitung des zweiten freien Endes des Mischkörpers lässt sich der erfindungsgemässe statische Mischer mit einer Vielzahl von wie oben beschriebenen Mischern kombinieren. Vorzugsweise ist der Übergang abstandslos ausgestaltet, alternativ kann jedoch ein anschliessender statischer Mischer beabstandet zum erfindungsgemässen angeordnet sein.

In einer bevorzugten Ausführungsform sind dem erfindungsgemässen statischen Mischer ein Verdränger und ein Impfrohr bezüglich der Fliessrichtung vorgelagert angeordnet. Der Verdränger bildet mit dem Mischrohr einen Ringspalt, durch welchen ein erstes zu mischendes Fluid zuführbar ist. Das Impfrohr ist in einer zentrischen Bohrung im Verdränger angeordnet, wobei ein zweites zu mischendes Fluid durch das Impfrohr zuführbar ist.

Durch die Wahl des Aussendurchmessers des Verdrängers kann die Grösse des Ringspalts und somit die Strömungsgeschwindigkeit beeinflusst werden.

Vorzugsweise weist ein gegen den erfindungsgemässen statischen Mischer gerichtetes freies Ende des Verdrängers eine zum ersten feien Ende des erfindungsgemässen statischen Mischers komplementäre Form auf. Durch den Abstand zwischen dem Verdränger und dem Einlauf des statischen Mischers, lässt sich der Strömungsquerschnitt zwischen dem Verdränger und dem Mischer und somit die dort vorherrschende Strömungsgeschwindigkeit beeinflussen.

Durch die Beeinflussung der Strömungsgeschwindigkeit kann der lokal vorherrschende Druck beeinflusst werden. Durch eine geschickte Einstellung des Strömungsquerschnittes lässt sich ein Rückfluss eines durch das Impfrohr eingeführten Additivs verhindern.

Weitere Ausführungsformen sind in den abhängigen Ansprüchen angegeben.

Ausgehend von dem voran beschriebenen Stand der Technik besteht eine Aufgabe darin, ein Verfahren und eine Vorrichtung für eine kontinuierliche Reaktionsführung bereit zu stellen, bei dem unerwünschte Nebenreaktionen oder eine Verstopfung bzw. Belegung des Reaktorsystems weitgehend vermieden wird und die Vorrichtung über längere Zeiträume ohne Unterbrechung betrieben werden kann. Diese Aufgabe wird in der Weise gelöst, dass die Edukte vor dem Eintreten in den eigentlichen Rohrreaktor wenn nötig vorgewärmt werden, so dass eine erforderliche Reaktionstemperatur erreicht wird.

Danach sollen die Edukte in den mehrstufigen Rohrreaktor pulsationsfrei zudosiert werden. Dabei soll der mehrstufige Rohrreaktor so konfiguriert werden, dass
- die Mischgeschwindigkeit der Reaktionsgeschwindigkeit,
- das Strömungsmuster dem Reaktionsmechanismus,
- die Verweilzeit der Reaktionszeit,
- und der Wärmeübergang der Wärmeentwicklung angepasst wird.
Es liegt die Aufgabe zugrunde, einen verbesserten kontinuierlichen mehrstufigen Rohrreaktor zu schaffen, wobei der Reaktordurchmesser des Rohrreaktors nicht verändert wird. Die Konfiguration gemäss den vier Bedingungen erfolgt ausschliesslich durch die Veränderung des Lückenvolumen ε, dem Fachmann auch als Porosität geläufig. Eine Vergrösserung der Nennweite wird nur dann in Betracht gezogen, wenn einzig zusätzliche Verweilzeit bei engem Verweilzeitspektrum geschaffen werden muss. Dies erfolgt allerdings nach dem Stand der Technik mit handelsüblichen statischen Mischern.

Die vier wichtigen Auslegungsbedingungen lauten zusammengefasst wie folgt:
Eine praktische Klassifikation der Reaktionsgeschwindigkeit greift auf die Halbwertszeit t_{H} zurück. Das ist die Zeit t_{H} nach der das Edukt bei einer bestimmten Temperatur zur Hälfte abreagiert ist, also den Umsatz Ui = 0.5 erreicht hat. Man bezeichnet Reaktionen mit:
   t_{H} > 1 min als langsam
   1s < t_{H} < 1 min als normal
   1ms < t_{H} <1 s als schnell
   t_{H} <1ms als sehr schnell.

Die zweite zusätzliche beeinflussende Grösse ist die Mischeffizienz resp. die Mischzeit des verwendeten Rohrreaktors. Besonders bei sehr schnellen oder mehrphasigen Reaktionen (flüssig/flüssig oder gas/flüssig) ist die innige Vermischung sehr wichtig, weil der Stofftransport durch die verschiedenen stationären Grenzschichten limitiert ist. Die Mischzeit wird ausschliesslich durch den Volumenstrom, die Mischergeometrie, also mitunter durch die Porosität und den Rohrdurchmesser bestimmt.

Das Strömungsmuster wird durch die Viskositäten und die Strömungsbedingung, also hauptsächlich durch die Reynolds- und die Froud-Zahl beeinflusst. Dabei treten im mehrstufigen Rohrreaktor je nach Reaktionsmechanismus unterschiedliche Strömungsmuster auf. Im Rohrreaktor können turbulente also auch laminare Strömungsbedingungen auftreten. Zudem muss bei gas/flüssig Reaktionen darauf geachtet werden, dass stabile Strömungszustände vorherrschen.

Die Verweilzeit muss bei der kontinuierlichen Reaktionsführung der Reaktionszeit angepasst werden. Dabei gilt ein besonderes Augenmerk auf der Verweilzeitverteilung, die direkt die Raum/Zeit-Ausbeute beeinflussen kann. Bei Polymerisation kann je nach Reaktion, über die Verweilzeit und die Verweilzeitverteilung die Molmassenverteilung eingestellt werden.

Bei allen chemischen Prozessen spielt die Energieübertragung für die Reaktionsführung eine große Rolle. In den meisten Fällen handelt sich hierbei um Wärme, die innerhalb und zwischen verschiedenen Systemen übertragen wird. Eine genaue Kenntnis der Wärmeübertragungsmechanismen ist unumgänglich, um einen sicheren Ablauf des Prozesses und eine richtige Dimensionierung des Rohrreaktors zu gewährleisten. Dabei können Reaktionen adiabat, isotherm oder auch polytrop geführt werden. Die Art der Reaktionsführung wird ausschließlich durch den Reaktionsmechanismus und die Ausführung des Rohrreaktors beeinflusst.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: Eine seitliche Schnittansicht eines erfindungsgemässen Mischreaktors;
- Fig. 2: Einen vergrösserten Ausschnitt des Einlaufbereichs des Mischreaktors der Figur 1;
- Fig. 3: Eine perspektivische Darstellung eines Verdrängers;
- Fig. 4: Eine perspektivische Darstellung einer ersten Ausführungsform eines erfindungsgemässen statischen Mischers;
- Fig. 5: Eine seitliche Schnittansicht des statischen Mischers der Figur 4;
- Fig. 6: Eine perspektivische Teilansicht einer zweiten Ausführungsform eines statischen Mischers;
- Fig. 7: Einen Querschnitt durch den statischen Mischer der Figur 6;
- Fig. 8: Eine perspektivische Teilansicht einer dritten Ausführungsform eines statischen Mischers;
- Fig. 9: Einen Querschnitt durch den statischen Mischer der Figur 8;
- Fig. 10: Eine perspektivische Ansicht einer vierten Ausführungsform eines statischen Mischers;
- Fig. 11: Einen Querschnitt durch den statischen Mischer der Figur 10;
- Fig. 12: Eine perspektivische Ansicht einer fünften Ausführungsform eines statischen Mischers;
- Fig. 13: Einen Querschnitt durch den statischen Mischer der Figur 12;
- Fig. 14: Eine perspektivische Ansicht einer sechsten Ausführungsform eines statischen Mischers;
- Fig. 15: Einen Querschnitt durch den statischen Mischer der Figur 14;
- Fig. 16: Einen Querschnitt einer siebten Ausführungsform eines statischen Mischers; und
- Fig. 17: Einen Querschnitt einer achten Ausfiihrungsform eines statischen Mischers mit einem Mischrohr und einem Verdränger.

### BESCHREIBUNG BEVORZUGTER AUSFÜHRUNGSFORMEN

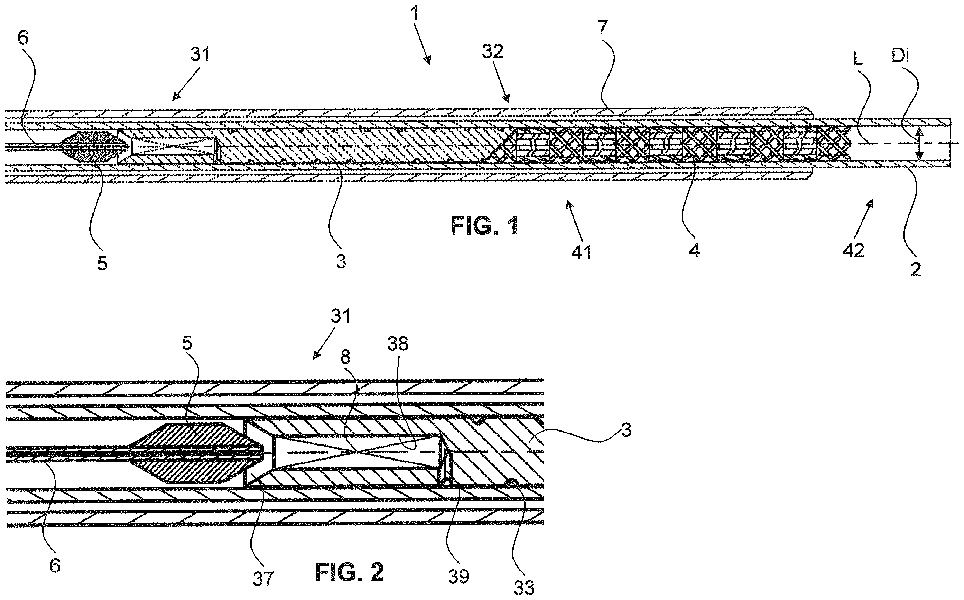

Die Figur 1 zeigt eine seitliche Schnittansicht eines erfindungsgemässen Mischreaktors 1 mit einem Mischrohr 2, einem im Mischrohr 2 angeordneten erfindungsgemässen statischen Mischer 3, einem diesem Mischer in Strömungsrichtung nachgeschalteten herkömmlichen statischen Mischer 4, einem dem erfindungsgemässen statischen Mischer 3 in der Strömungsrichtung vorgestellten Verdränger 5 mit einem Impfrohr 6 und einem das Mischrohr 2 umgebende Mantelrohr 7. Der Mischreaktor 1 ist im Wesentlichen zylinderförmig und weist eine Längsachse L auf, welche vorzugsweise eine Längsmittelachse ist.

Der Verdränger 5 ist am Impfrohr 6 befestigt und wird durch dieses in Position gehalten. Der erfindungsgemäss statische Mischer 3 steht am nachgeschalteten statischen Mischer 4 an, welcher durch einen nicht dargestellten Anschlag in Position gehalten ist oder welcher mit dem Mischrohr 2 verschweisst ist.

Zwischen dem Mischrohr 2 und dem Mantelrohr 7 ist ein Ringspalt ausgebildet, durch welchen ein Fluid (Flüssigkeit / Gas) strömen kann. Das Fluid kann Wärme zu- oder abführen, sodass der Mischreaktor 1 geheizt oder gekühlt werden kann.

Ein zu mischendes Fluid strömt erst parallel zum Impfrohr 6, umströmt den Verdränger 5 und durchströmt anschliessend den erfindungsgemässen statischen Mischer 3 und den herkömmlichen statischen Mischer 4. Der Innendurchmesser Di des Mischrohres 2 bildet zusammen mit dem Aussendurchmesser des Verdrängers 5 einen Ringspalt.

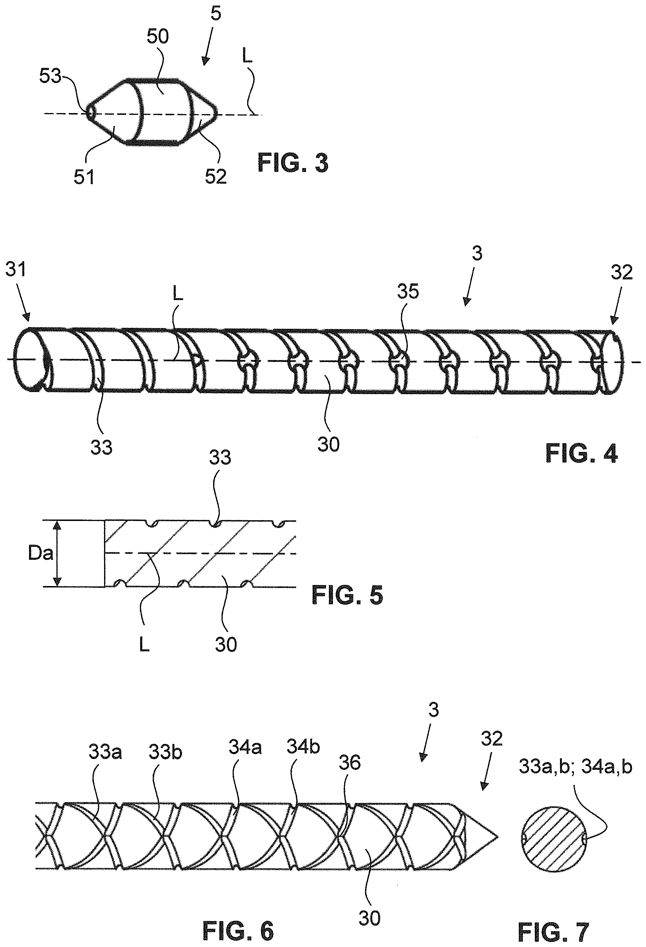

Ein vergrösserter Ausschnitt des Einlaufbereichs des Mischreaktors 1 der Figur 1 ist in der Figur 2 dargestellt. Das Impfrohr 6 ist in einer zentrischen Bohrung 53 (siehe Figur 3) des Verdrängers 5 angeordnet und steht diesem stromabwärts nicht vor. Der Verdränger 5 bildet im Einlaufbereich einen Ringspalt mit dem ersten freien Ende 31 des statischen Mischers 3. Durch das Impfrohr ist ein Additiv dem zu mischenden Fluid zuführbar, wobei die Zuführung an einem stromabwärts liegenden zweiten freien Ende 52 des Verdrängers 5 erfolgt.

Der in Figur 3 dargestellte Verdränger 5 weist einen im wesentlichen zylindrischen Verdrängerkörper 50 mit einer Längsachse L und zwei sich in der Richtung der Längsachse L gegenüberliegenden freien Enden 51, 52 auf, sowie eine im Verdrängerkörper 50 zentral angeordnete Längsdurchgangsbohrung 53, welche sich von einem ersten freien Ende 51 entlang der Längsachse L zum zweiten freien Ende 52 erstreckt, wobei die Längsachse L eine Längsmittelachse ist.

In der Fliessrichtung anschliessend an den Verdränger 5 ist eine erste Ausführungsform eines erfindungsgemässen statischen Mischers 3 angeordnet, welcher in der Figur 4 separat dargestellt ist. Der statische Mischer 3 weist einen Mischkörper 30 mit einer Längsachse L und zwei sich in der Richtung der Längsachse L gegenüberliegende freie Enden 31, 32 auf. Der Mischkörper 30 ist im Wesentlichen ein Vollkörper mit einem kreisförmigen Querschnitt mit einem Durchmesser Da (siehe Figur 5), welcher sich entlang der Längsachse L erstreckt.

Das erste freie Ende 31 weist einen kegelförmigen Einlauf 37 auf, welcher in der Figur 2 ebenfalls dargestellt ist. Das zweite freie Ende 32 weist eine zur Längsachse L winklig angeordnete elliptische Fläche auf. Die Blickrichtung auf Figur 4 entspricht der Sicht von unten auf den im Mischreaktor 1 eingebauten statischen Mischer 3.

Der Mischkörper 30 weist einen ersten Kanal 33 auf, welcher sich vom ersten freien Ende 31 zum zweiten freien Ende 32 erstreckt, genauer vom Anfang bis zum Ende des Mischkörpers 30. Der erste Kanal 33 windet sich gleichmässig um den Mischkörper 30 entlang der Längsachse L und ist daher schrauben- oder helixförmig.

Der erste Kanal 33 ist eine in der Manteloberfläche des Mischkörpers erzeugte Nut. Vorzugsweise handelt es sich dabei um eine gefräste Nut. Wie in Figur 5 gezeigt wird, weist die Nut 33 einen halbkreisförmigen Querschnitt auf.

Entlang des ersten Kanals 33 sind Kanalaufweitungen 35 angeordnet, welche in dieser Ausführungsform Senkbohrungen sind, welche tiefer in den Mischkörper 30 ragen als der erste Kanal 33. Die Kanalaufweitungen 35 unterbrechen den kontinuierlichen Verlauf des ersten Kanals und aufgrund der Aufweitung resultiert einerseits eine Strömungsverlangsamung und andererseits eine Verwirbelung des im ersten Kanal 33 strömenden Fluides. Die Kanalaufweitungen 35 sind nachfolgend zum Austritt des Verbindungskanals 39 jeweils nach einer Umrundung des Mischkörpers 30 angeordnet.

Die Figur 6 zeigt eine zweite Ausführungsform eines statischen Mischers 3, wobei im Unterschied zur ersten Ausführungsform, das zweite freie Ende 32 die Form eines spitz zusammenlaufenden Kegels aufweist und mehrere sich kreuzende erste und zweite Kanäle 33a, 33b, 34a, 34b mit elliptischem Querschnitt vorhanden sind. Dargestellt sind zwei rechts orientierte erste Kanäle 33a, 33b und zwei links orientierte zweite Kanäle 34a, 34b, welche Kreuzungen 36 aufweisen. Wie in der Figur 7 dargestellt weisen die Kanäle 33a,b 34a,b einen elliptischen Querschnitt auf, d.h. sie bilden eine elliptische Nut.

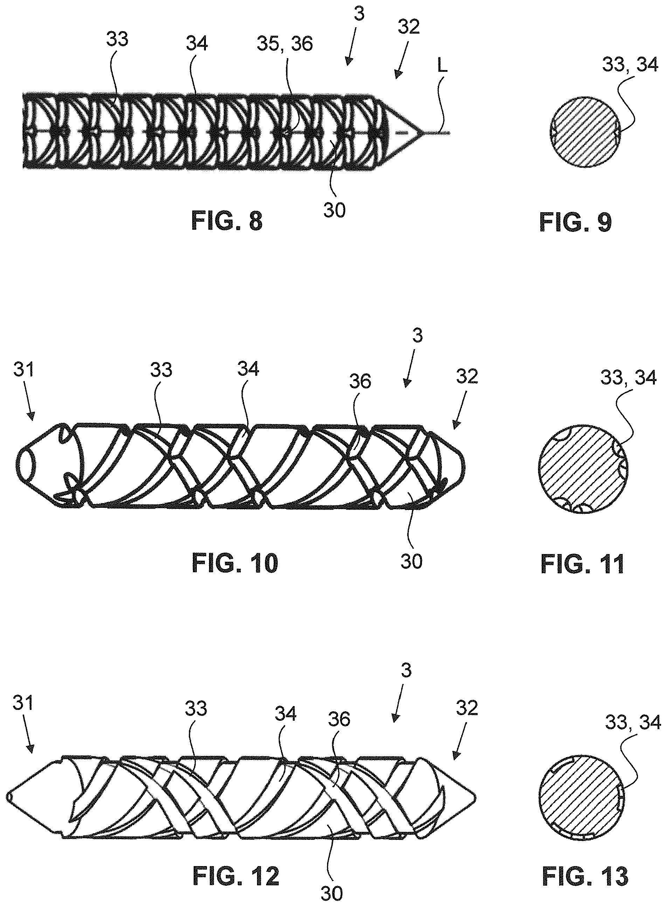

Die Figur 8 zeigt eine dritte Ausführungsform eines statischen Mischers 3. Im Unterschied zur zweiten Ausführungsform der Figur 6 sind die ersten und zweiten Kanäle 33, 34 in engeren Abständen um den Mischkörper 30 gewickelt und Kanalaufweitungen 35 sind bei jeder Kreuzung 36 angeordnet. Auch weisen die ersten und zweiten Kanäle 33, 34 einen dreieckigen Querschnitt auf, wie in der Figur 9 gezeigt wird. Die Kanalaufweitungen 35 sind immer noch breiter als die ersten und zweiten Kanäle 33, 34, im Unterschied zur ersten Ausführungsform der Figur 4 sind sie jedoch weniger tief.

Die Figur 10 zeigt eine vierte Ausführungsform eines statischen Mischers 3 mit einem Mischkörper 30, einem ersten und einem zweiten freien Ende 31, 32 und mehreren links bzw. rechts orientierten Kanälen 33a,b 34a,b. Im Unterschied zur ersten Ausführungsform von Figur 4 weisen beide freien Enden 31, 32 die Form eines Kegelstumpfes auf, die rechts orientierten Kanäle 33a,b sind spiralförmig und ungleichmässig, mit einem Pitchverhältnis von 1:2, am Umfang angeordnet, d.h. die Abstände zwischen zwei benachbarten Kanälen 33a,b alternieren; und die links orientierten Kanäle 34a,b sind ebenfalls spiralförmig aber gleichmässig am Umfang angeordnet, d.h. die Abstände zwischen zwei benachbarten Kanälen sind jeweils gleich gross. Andere Pitchverhältnisse von 1:3 oder 1:4 sind auch denkbar.

Die Figur 12 zeigt eine fünfte Ausführungsform eines statischen Mischers 3, wobei im Unterschied zur vierten Ausführungsform der Figur 10 das erste und zweite freie Ende 31, 32 etwas mehr zusammen laufen und die ersten und zweiten Kanäle 33, 34 einen rechteckigen Querschnitt aufweisen.

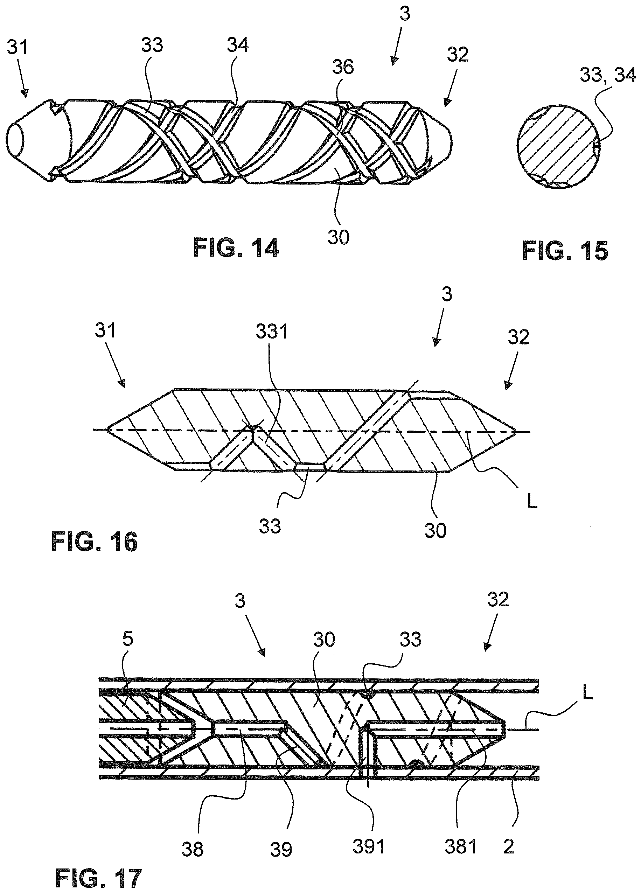

Die Figur 14 zeigt eine sechste Ausführungsform eines statischen Mischers 3, wobei im Unterschied zur vierten oder fünften Ausführungsform der Figuren 10 oder 12 die ersten und zweiten Kanäle 33, 34 einen trapezförmigen Querschnitt aufweisen.

Die Figur 16 zeigt einen Querschnitt einer siebten Ausführungsform eines statischen Mischers 3, wobei sich ein Teil des durchgängigen Kanals 33 im Innern des Mischkörpers 30 erstreckt und durch Bohrungen gebildet wird. Die Bohrungen können sich im Innern kreuzende Bohrungen oder Durchgangsbohrungen sein. Die Figur 17 zeigt einen Querschnitt einer achten Ausführungsform eines statischen Mischers 3 mit einem Mischrohr 2 und einem Verdränger 5, wobei der Mischkörper 30 zusätzlich einen zusätzlichen zentralen Kanal 381 aufweist, der bezüglich der Längsrichtung beabstandet zum Einlaufkanal 38 angeordnet ist uns sich vorzugsweise zentral im Innern des Mischköpers 30 bis zum zweiten freien Ende 32 erstreckt. Der zusätzliche zentrale Kanal 381 weist auf seiner dem zweiten freien Ende 32 zugewandten Seite gegenüberliegenden Seite einen zusätzlichen Verbindungskanal 391 auf, welcher vom Innern im Wesentlichen radial nach aussen führt. Eine winklige Ausführung des zusätzlichen Verbindungskanals 391 ist jedoch auch denkbar. Die beiden zusätzlichen Kanäle 381, 391 können auch in einer der vorgängig beschriebenen Ausführungsformen ausgebildet sein. Es ist darauf zu achten, dass die zusätzlichen Kanäle 381, 391 den mindestens einen durchgängigen Kanal (33, 34) nicht kreuzen.

Wie in der Figur 17 dargestellt, kann der zusätzliche Verbindungskanal 391 durch eine Öffnung im Mischrohr fortgesetzt werden, um eine Verbindung nach aussen zu schaffen. Falls die Passung zwischen dem Mischkörper 30 und dem Mischrohr 2 keine genügende Dichtheit gewährleistet, ist zusätzlich eine Dichtung um die Austrittsöffnung des zusätzlichen Verbindungskanals 391 an der Manteloberfläche angeordnet anordenbar, welche beispielsweise in einer Nut um diese Austrittsöffnung einlegbar ist.

**BEZUGSZEICHENLISTE**

| | | | |
|---|---|---|---|
| 1 | Mischreaktor | 391 | Zusätzlicher Verbindungskanal |
| 2 | Mischrohr | | |
| 3 | Statischer Mischer | 4 | Herkömmlicher statischer Mischer |
| 30 | Mischkörper | | |
| 31 | Erstes freies Ende | 5 | Verdränger |
| 32 | Zweites freies Ende | 50 | Verdrängerkörper |
| 33 | Erster Kanal | 51 | Erstes freies Ende |
| 33a,b | Rechts orientierter erster Kanal | 52 | Zweites freies Ende |
| | | 53 | Zentrische Bohrung |
| 331 | Alternativer erster Kanal | 6 | Impfrohr |
| 34 | Zweiter Kanal | 7 | Mantelrohr |
| 34a,b | Links orientierter erster Kanal | 8 | Weiterer statischer Mischer |
| 35 | Kanalaufweitung | | |
| 36 | Kreuzung | L | Längsachse |
| 37 | Einlauf | Di | Innerer Durchmesser |
| 38 | Einlaufkanal | Da | Äusserer Durchmesser |
| 381 | Zusätzlicher zentraler Kanal | | |
| 39 | Verbindungskanal | | |

## Patentansprüche

1. Statischer Mischer (3) mit einem Mischkörper (30), welcher eine Längsachse (L) und zwei sich in Richtung der Längsachse (L) gegenüberliegende freie Enden (31, 32) aufweist, wobei mindestens ein durchgängiger Kanal (33, 34) die beiden freien Enden (31, 32) miteinander verbindet, wobei der Mischkörper (30) ein Vollkörper ist und sich der mindestens eine durchgängige Kanal (33, 34) zumindest teilweise an der Oberfläche des Mischkörpers (30) erstreckt, **dadurch gekennzeichnet, dass** ein Einlaufkanal (38) zentrisch am ersten freien Ende (31) des Mischkörpers (30) angeordnet ist, welcher sich parallel zur Längsachse (L) zumindest über einen Teil der Länge des Mischkörpers (30) erstreckt und welcher an seinem dem ersten freien Ende (31) gegenüberliegenden Ende über mindestens einen Verbindungskanal (39) mit dem mindestens einen durchgängigen Kanal (33, 34) verbunden ist.

2. Statischer Mischer (3) gemäss Anspruch 1, wobei der Einlaufkanal (38) auf der gegen das erste freie Ende (31) gerichteten Seite trichterförmiger Einlauf (37) ausgebildet ist.

3. Statischer Mischer (3) gemäss Anspruch 1 oder 2, wobei sich der Verbindungskanal (39) im Wesentlichen radial vom Einlaufkanal (38) nach aussen erstreckt.

4. Statischer Mischer (3) gemäss einem der Ansprüche 1 bis 3, wobei im Einlaufkanal (38) ein weiterer statischer Mischer (8), bevorzugt ein poröser statischer Mischer, insbesondere ein poröser Sinterzylinder angeordnet ist.

5. Statischer Mischer (3) gemäss einem der Ansprüche 1 bis 4, wobei die Hauptrichtung des mindestens einen durchgängigen Kanals (33, 34) im Wesentlichen nicht parallel zur Längsachse (L) verläuft.

6. Statischer Mischer (3) gemäss einem der Ansprüche 1 bis 5, wobei Kanalaufweitungen (35) entlang des mindestens einen durchgängigen Kanals (33, 34) angeordnet sind.

7. Statischer Mischer (3) gemäss einem der Ansprüche 1 bis 4, wobei der statische Mischer (3) mindestens zwei durchgängige Kanäle (33, 44) aufweist, welche Kanalkreuzungen (36) aufweisen, wobei optional an den Kanalkreuzungen (36) Kanalaufweitungen (35) angeordnet sind.

8. Statischer Mischer (3) gemäss einem der Ansprüche 1 bis 9, wobei das erste freie Ende (31) und/oder das zweite freie Ende (32) als eine zur Längsachse (L) senkrecht oder winklig angeordnete Fläche, als mehrere aneinander angrenzende Flächen, oder konusförmig ausgebildet sind.

9. Statischer Mischer (3) gemäss einem der Ansprüche 1 bis 8, wobei der mindestens eine durchgängige Kanal (33, 34) einen polyederförmigen oder gerundeten Querschnitt, vorzugsweise einen dreieckigen, rechteckigen, trapez-, teilkreis- oder teilellipsenförmigen Querschnitt aufweist.

10. Statischer Mischer (3) gemäss einem der Ansprüche 1 bis 9, wobei sich der mindestens eine durchgängige Kanal (33, 34) spiralförmig zwischen den beiden freien Enden (31, 32) erstreckt.

11. Mischreaktor (1) mit einem Mischrohr (2), welches einen inneren Durchmesser (Di) aufweist und mit mindestens einem darin angeordneten statischen Mischer (3) gemäss einem der Ansprüche 1 bis 10.

12. Mischreaktor (1) gemäss Anspruch 11, wobei der innere Durchmesser (Di) des Mischrohres (2) und ein äussere Durchmesser (Da) des statischen Mischers (3) gemäss einem der Ansprüche 1 bis 10 eine nahezu spielfreie Passung bilden, vorzugsweise mit einem Spiel von unter 0,5 Millimeter.

13. Mischreaktor (1) gemäss Anspruch 11 oder 12, wobei dem statischen Mischer (3) gemäss einem der Ansprüche 1 bis 10 ein statischer Mischer (4) mit Lamellen oder ein poröser statischer Mischer in der Fliessrichtung nachfolgend angeordnet ist.

14. Mischreaktor (1) gemäss einem der Ansprüche 11 bis 13, wobei dem statischen Mischer (3) gemäss einem der Ansprüche 1 bis 10 ein Verdränger (5) und ein Impfrohr (6) bezüglich der Fliessrichtung vorgelagert angeordnet sind, wobei der Verdränger (5) mit dem Mischrohr (2) einen Ringspalt bildet, durch welchen ein erstes zu mischendes Fluid zuführbar ist, und wobei das Impfrohr (6) in einer zentrischen Bohrung (53) im Verdränger (5) angeordnet ist, wobei ein zweites zu mischendes Fluid durch das Impfrohr (6) zuführbar ist.

## Claims

1. A static mixer (3) with a mixing body (30) which has a longitudinal axis (L) and two free ends (31, 32) in opposing directions relating to the longitudinal axis (L), wherein at least one continuous passage (33, 34) is connecting the two free ends (31, 32), wherein the mixing body (30) is a solid body, and wherein the at least one continuous passage (33, 34) extends at least partly on the surface of the mixing body (30), **characterized in that** an inlet channel (38) is arranged centrically at the first free end (31) of the mixing body (30), which extends parallel to the longitudinal axis (L) at least a part of the length of the mixing body (30) and which is connected to the at least one continuous passage (33, 34) via at least one connecting channel (39) at its free end which is located opposite to its first free end (31).

2. The static mixer (3) according to claim 1, wherein the inlet channel (38) is formed as a funnel-shaped inlet (37) at the side directed towards the first free end (31).

3. The static mixer (3) according to claim 1 or 2, wherein the connecting channel (39) extends substantially radially outwards from the inlet channel (38).

4. The static mixer (3) according to any one of claims 1 to 3, wherein a further static mixer (8), preferably a porous static mixer, in particular a porous sintering cylinder, is arranged in the inlet channel (38).

5. The static mixer (3) according to any one of claims 1 to 4, wherein the main direction of the at least one continuous passage (33, 34) is substantially not aligned in parallel to the longitudinal axis (L).

6. The static mixer (3) according to any one of claims 1 to 5, wherein channel expansions (35) are arranged along the at least one continuous passage (33, 34).

7. The static mixer (3) according to any one of claims 1 to 4, wherein the static mixer (3) has at least two continuous passages (33, 44) which have channel crossings (36), wherein channel expansions (35) are optionally provided at the channel crossings.

8. The static mixer (3) according to any one of claims 1 to 7, wherein the first free end (31) and / or the second free end (32) is formed as a surface arranged in a perpendicular or angular relationship to the longitudinal axis (L), as a plurality of adjacent surfaces or are cone-shaped.

9. The static mixer (3) according to any one of claims 1 to 8, wherein the at least one continuous passage (33, 34) has a polyhedron or rounded cross-section, preferably a triangular, rectangular, trapezoidal, semicircular or part-elliptical cross-section.

10. The static mixer (3) according to any one of claims 1 to 9, wherein the at least one continuous passage (33, 34) extends helically between the two free ends (31, 32).

11. A mixing reactor (1) having a mixing tube (2) which has an internal diameter (Di) and with at least one static mixer (3) according to one of claims 1 to 10 arranged therein.

12. The mixing reactor (1) according to claim 11, wherein the inner diameter (Di) of the mixing tube (2) and an outer diameter (Da) of the static mixer (3) according to one of claims 1 to 11 form a virtually play-free fit, preferably with a play of less than 0.5 millimeters.

13. The mixing reactor (1) according to claim 11 or 12, wherein a static mixer (4) with lamellas or a porous static mixer is arranged downstream of the static mixer (3) according to one of the claims 1 to 10.

14. The mixing reactor (1) according to any one of claims 11 to 13, wherein a displacer (5) and a injecting tube (6) are arranged upstream of the static mixer (3) according to any one of claims 1 to 10, wherein the displacer (5) forms with the mixing tube (2) an annular slit, through which a first fluid to be mixed is provided, and wherein the injecting tube (6) is arranged in a centric bore (53) in the displacer (5), and wherein a second fluid to be mixed can be fed through the injecting tube (6).

## Revendications

1. Mélangeur statique (3) avec un corps mélangeur (30) ayant un axe longitudinal (L) et deux extrémités libres opposées (31, 32) dans le sens de l'axe longitudinal (L), où au moins un passage continu (33, 34) connecte les deux extrémités libres (31, 32) les unes aux autres, où le corps mélangeur (30) est un corps plein et ledit au moins un passage continu (33, 34) s'étend au moins en partie sur la surface du corps mélangeur (30), **caractérisé en ce qu'**un canal d'entrée (38) est disposé au centre de la première extrémité libre (31) du corps mélangeur (30) s'étendant en parallèle à l'axe longitudinal (L) au moins sur une partie de la longueur du corps mélangeur (30) et qui est relié par l'intermédiaire d'au moins un canal de liaison (39) avec le au moins un passage continu (33, 34) à son extrémité opposée à sa première extrémité libre (31).

2. Mélangeur statique (3) selon la revendication 1, dans lequel le canal d'entrée (38) est formé en forme d'entonnoir (37) sur le côté dirigé envers la première extrémité libre (31).

3. Mélangeur statique (3) selon la revendication 1 ou 2, dans lequel le canal de liaison (39) s'étend sensiblement radialement à partir du canal d'entrée (38) vers l'extérieur.

4. Mélangeur statique (3) selon l'une quelconque des revendications 1 à 3, dans lequel un mélangeur statique supplémentaire (8), de préférence un mélangeur statique poreux, en particulier un cylindre poreux fritté, est disposé dans le canal d'entrée (38).

5. Mélangeur statique (3) selon l'une quelconque des revendications 1 à 4, dans lequel la direction principale de le au moins un canal continu (33, 34) est sensiblement non parallèle à l'axe longitudinal (L).

6. Mélangeur statique (3) selon l'une quelconque des revendications 1 à 5, dans lequel des élargissements de canaux (35) sont disposés le long de le au moins un canal continu (33, 34).

7. Mélangeur statique (3) selon l'une quelconque des revendications 1 à 4, dans lequel le mélangeur statique (3) comprend au moins deux canaux continus (33, 44), qui comprennent des croisements de canaux (36), où optionnellement des élargissements de canaux (35) sont disposés aux croisements de canaux (36).

8. Mélangeur statique (3) selon l'une quelconque des revendications 1 à 7, dans lequel la première extrémité libre (31) et / ou la deuxième extrémité libre (32) est formée en tant que surface orientée perpendiculairement ou angulairement par rapport à l'axe longitudinal (L), comme une pluralité de surfaces adjacentes, ou sont en forme de cône.

9. Mélangeur statique (3) selon l'une quelconque des revendications 1 à 8, dans lequel le au moins un canal continu (33, 34) présente une section transversale polygonale ou arrondie, de préférence une forme triangulaire, rectangulaire, trapézoïdale, en forme de cercle partiel ou en forme d'ellipse partielle.

10. Mélangeur statique (3) selon l'une quelconque des revendications 1 à 9, dans lequel le au moins un canal continu (33, 34) s'étend en hélice entre les deux extrémités libres (31, 32).

11. Réacteur mélangeur (1) avec un tube mélangeur (2) ayant un diamètre intérieur (Di) et comportant au moins un mélangeur statique (3) selon l'une quelconque des revendications 1 à 10, disposé à l'intérieur de celui-ci.

12. Réacteur mélangeur (1) selon la revendication 11, dans lequel le diamètre intérieur (Di) du tube mélangeur (2) et un diamètre extérieur (Da) du mélangeur statique (3) selon l'une quelconque des revendications 1 à 10 forment un ajustement pratiquement sans jeu, de préférence avec un jeu de moins de 0,5 millimètres.

13. Réacteur mélangeur (1) selon la revendication 11 ou 12, dans lequel un mélangeur statique (4) avec des ailettes ou un mélangeur statique poreux est arrangé suivant le mélangeur statique (3) selon l'une quelconque des revendications 1 à 10 dans la direction d'écoulement.

14. Réacteur mélangeur (1) selon l'une quelconque des revendications 11 à 13, dans lequel le mélangeur statique (3) selon l'une quelconque des revendications 1 à 10, un évinceur (5) et un tuyau d'injection (6) sont disposés en amont par rapport à la direction d'écoulement, où l'évinceur (5) forme un espace annulaire avec le tube mélangeur (2) à travers lequel un premier fluide à mélanger est fourni, et où le tuyau d'injection (6) est disposé dans un alésage central (53) dans l'évinceur (5), où un second fluide à mélanger peut être alimenté par le tuyau d'injection (6).
